# EUROPEAN PATENT APPLICATION

(11) **EP 2 405 571 A1**
(43) Date of publication of application: **11.01.2012**
(21) Application number: 10793783.1
(22) Date of filing: 09.06.2010
(51) Int. Cl.: H02P 9/04, H02J 7/00, H02M 3/00, H01M 10/48

(54) **POWER SOURCE DEVICE**

(30) Priority: 29.06.2009 JP 2009153386
(71) Applicant: Panasonic Corporation, Kadoma-shi Osaka 571-8501 (JP)
(72) Inventor: AKIMASA, Koji, Osaka-shi, Osaka 540-6207 (JP); MURAKAMI, Takaharu, Osaka-shi, Osaka 540-6207 (JP)
(74) Representative: Kügele, Bernhard
(86) International application number: PCT/JP2010/003843
(87) International publication number: WO 2011/001606

(57) **Abstract**

An electrical generator is connected with a first end of DC/DC converter and an electric storage section is connected with a second end of the converter. An output voltage detecting circuit is connected to the electrical generator, and a control circuit is connected to both the DC/DC converter and the output voltage detecting circuit. The electrical generator raises an adjusting voltage Va at an output terminal to a first predetermined output voltage Vdc1 at a timing when regenerated electric power is produced. Control circuit 35 controls an output voltage Vd to be a lower control voltage Vdk which is lower than the first predetermined output voltage Vdc1. The lower control voltage Vd is set at a value which allows a main power supply to be charged maximally with the regenerated electric power.

## Description

### TECHNICAL FIELD

The present invention relates to a power supply device that stores electric power in an electric storage element, and prompts the electric storage element to discharge the stored electric power when necessary.

### BACKGROUND ART

In recent years, a fuel saving vehicle has been proposed. This vehicle makes effective use of regenerated electric power produced at an application of the brakes and stored in an electric storage element, thereby saving fuel. An electric power controller used in this vehicle is disclosed in, e.g. Patent Literature 1. Fig. 5 is a block diagram of this electric power controller.

Main power supply 101 is a lead battery, and its positive electrode is connected with load 105 via ignition switch 103. The positive electrode of main power supply 101 is also connected with vehicle electrical generator 107, which is mechanically connected to engine 109. When engine 109 works, electrical generator 107 is driven. Engine 109 is mechanically coupled to tires 111. When engine 109 works, driving force is generated and then tires 111 rotate for running the vehicle. When the brake is applied for speed reduction, tires 111 still rotates due to inertia of the vehicle, so that engine 109 keeps rotating. This rotational energy drives electrical generator 107, thereby producing the regenerated electric power.

In the foregoing vehicle, electric storage element 115 is connected to electrical generator 107 via DC/DC converter 113 in order to efficiently recover the regenerated electric power. Since electric storage element 115 is formed of an electric double-layered capacitor having a great amount of capacitance, storage element 115 can efficiently recover a large amount of electric power produced within a short period at a sudden speed reduction. DC/DC converter 113 is hooked up with computing device 117 for controlling the work of converter 113, and computing device 117 includes signal-receiving terminal 119 that receives a variety of signals from the vehicle. Computing device 117 thus receives, through terminal 119, information about the traveling status of the vehicle, operating state of engine 109, and a voltage state of main power supply 101, and then computing device 117 controls DC/DC converter 113 in response to those states, thereby controlling the charge or discharge of storage element 115.

The electric power controller discussed above allows tentatively charging the storage element 115 with the regenerated electric power produced at the speed reduction and including a large amount of electric power produced within a short period. The electric power controller also allows supplying charged regenerated electric power, at the times other than the speed reduction, to main power supply 101 or load 105. As a result, the energy consumed in applying the brakes can be recovered efficiently.

However, DC/DC converter 113 has an efficiency of approx. 80% when an electric current of 100A flows, so the remaining 20% is wasted as heat loss. However, when electric storage element 115 in this circuitry is charged or discharged, it needs electric current running through DC/DC converter 113. The heat loss thus happens twice, namely, once during charging and again during discharging. The efficiency in total can be thus lowered.

### Citation List

### Patent Literature

Patent Literature 1: Unexamined Japanese Patent Application Publication No. H06 - 296332

### SUMMARY OF THE INVENTION

The present invention aims to provide a power supply device to be mounted in a mobile body, and this power supply device can increase total efficiency in charging and discharging an electric storage section thereof by using a constant voltage control.

The power supply device of the present invention has a main power supply that can be charged and discharged, an electrical generator, a DC/DC converter, an electric storage section, an output voltage detecting circuit, a control circuit, and an adjusting voltage control section. The electrical generator includes an output terminal and a grounding terminal, and is connected to the main power supply at the output terminal. The electrical generator produces regenerated electric power when the mobile body undergoes a speed reduction. The DC/DC converter includes a first end and a second end, and is electrically connected to the output terminal of the electrical generator at the first end. The electric storage section is electrically connected to the second end of the DC/DC converter. The output voltage detecting circuit is electrically connected directly between the output terminal and the grounding terminal of the electrical generator for detecting output voltage (Vd) at the output terminal. The control circuit is electrically connected to the DC/DC converter and the output voltage detecting circuit. The adjusting voltage control section supplies an adjusting voltage (Va) to the electrical generator for adjusting the output voltage (Vd), and sets the adjusting voltage (Va) at a first predetermined output voltage (Vdc1) at a timing when the electrical generator produces the regenerated electric power. The control circuit then controls the DC/DC converter such that the output voltage (Vd) become a lower control voltage (Vdk) that is lower than the first predetermined output voltage (Vdc1). In addition, the adjusting voltage control section sets the adjusting voltage (Va) at a second predetermined output voltage (Vdc2) that is lower than the first predetermined output voltage (Vdc1) at a timing when the electrical generator ends the production of the regenerated electric power. The control circuit then controls the DC/DC converter such that the output voltage (Vd) become an upper control voltage (Vdu) that is higher than the second predetermined output voltage (Vdc2). The lower control voltage (Vdk) is set at a value with which the regenerated electric power can be charged maximally into the main power supply.

Alternatively, an adjustment terminal electrically connected to the electrical generator is disposed to an objective circuit portion for the electrical generator to control a voltage, and the output voltage detecting circuit is directly connected to the adjustment terminal instead of to the output terminal of the electrical generator such that the detecting circuit can detect the output voltage (Vd) that is supposed to be adjusted relative to the adjustment terminal.

The present invention allows controlling the output voltage (Vd) to be the lower control voltage (Vdk) that has been set at a value with which the regenerated electric power can be charged maximally into the main power supply. As a result, a charging amount to the main power supply can be increased when the regenerated electric power is charged into both the electric storage section and the main power supply. This increment allows reducing the heat loss incurred in the DC/DC converter or caused by resistances in wirings when the electric storage section is charged. The present invention thus can increase the efficiency of the power supply device.

### BRIEF DESCRIPTION OF DRAWINGS

Fig. 1 is a block diagram of a power supply device in accordance with a first embodiment of the present invention.
Fig. 2A shows a speed variation with time of a vehicle to which the power supply device is mounted in accordance with the first embodiment is mounted.
Fig. 2B shows a variation with time of adjusting voltage Va for an electrical generator of the power supply device in accordance with the first embodiment.
Fig. 2C shows a variation with time of output voltage Vd from the electrical generator of the power supply device in accordance with the first embodiment.
Fig. 2D shows a variation with time of reference voltage Vst of a DC/DC converter of the power supply device in accordance with the first embodiment.
Fig. 2E shows a variation with time of voltage Vc of an electric storage section of the power supply device in accordance with the first embodiment.
Fig. 3A shows a speed variation with time of a vehicle to which a power supply device is mounted in accordance with a second embodiment of the present invention.
Fig. 3B shows a variation with time of adjusting voltage Va for an electrical generator of the power supply device in accordance with the second embodiment.
Fig. 3C shows a variation with time of output voltage Vd from the electrical generator of the power supply device in accordance with the second embodiment.
Fig. 3D shows a variation with time of reference voltage Vst of a DC/DC converter of the power supply device in accordance with the second embodiment.
Fig. 3E shows a variation with time of voltage Vc of an electric storage section of the power supply device in accordance with the second embodiment.
Fig. 4 is a block diagram of a power supply device in accordance with a third embodiment of the present invention.

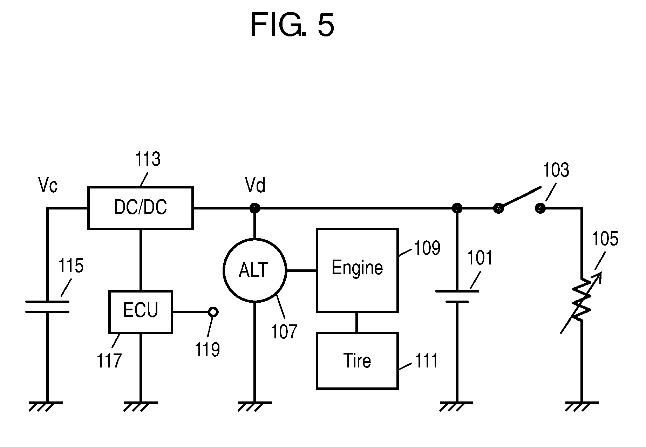

Fig. 5 is a block diagram of a conventional electric power controller.

### DESCRIPTION OF EMBODIMENTS

Exemplary embodiments of the present invention are demonstrated hereinafter with reference to the accompanying drawings. In each embodiment, similar elements to precedent ones have the same reference signs, and detailed descriptions thereof are sometimes omitted.

### Exemplary Embodiment 1

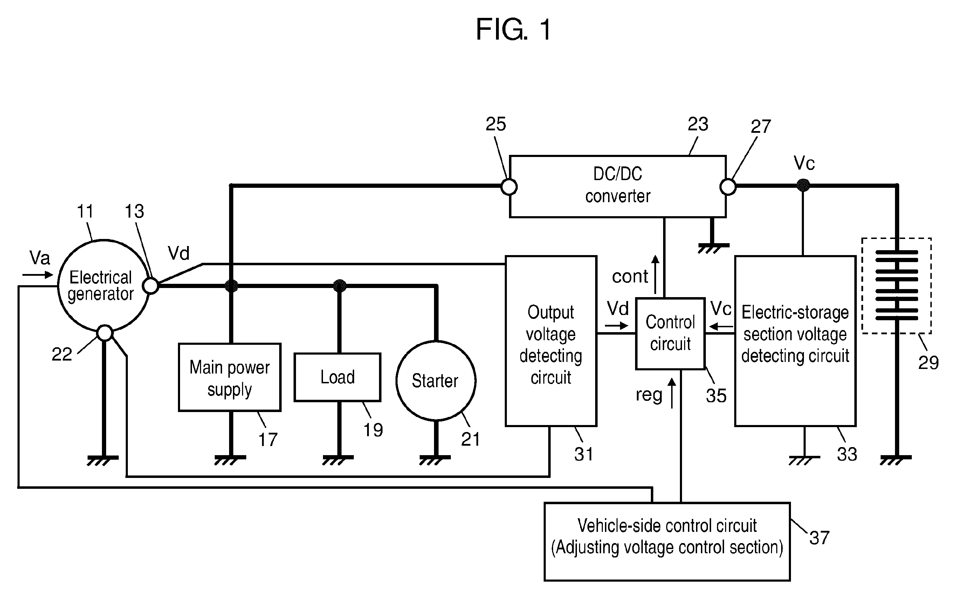

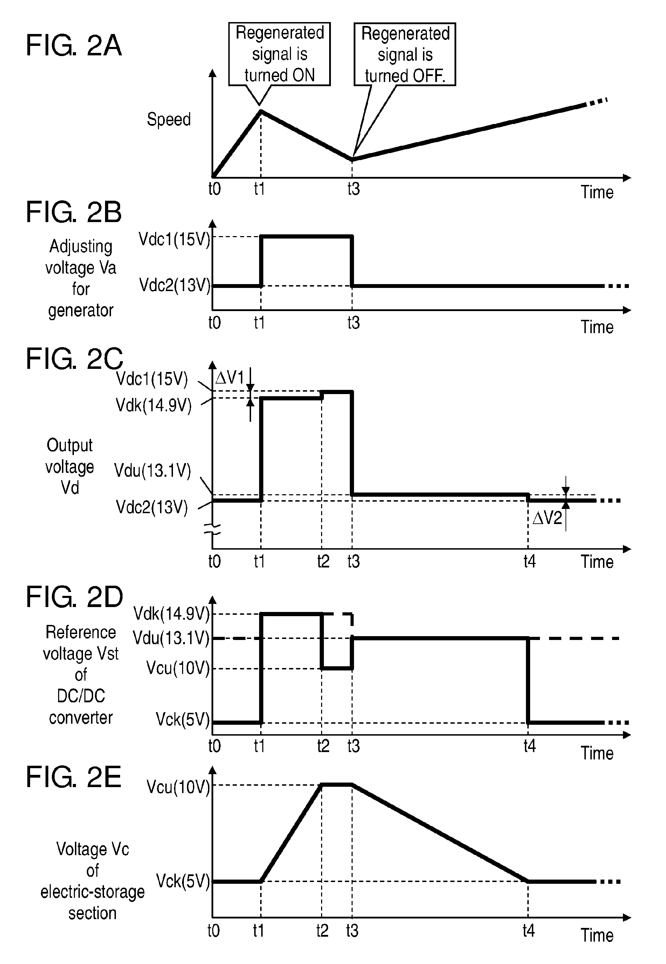

Fig. 1 is a block diagram of a power supply device in accordance with this first embodiment of the present invention. Figs. 2A - 2E show variations with time of respective characteristics of the power supply device in accordance with the first embodiment. Fig. 2A shows a speed variation with time of a vehicle to which the power supply device is mounted in accordance with the first embodiment. Fig. 2B shows a variation with time of adjusting voltage (Va) for an electrical generator of the power supply device in accordance with the first embodiment. Fig. 2C shows a variation with time of output voltage (Vd) from the electrical generator of the power supply device in accordance with the first embodiment. Fig. 2D shows a variation with time of reference voltage (Vst) of a DC/DC converter of the power supply device in accordance with the first embodiment. Fig. 2E shows a variation with time of voltage (Vc) of an electric storage section of the power supply device in accordance with the first embodiment. In Fig. 1, the wide lines indicate power-carrying wirings, and the narrow lines indicate signal-carrying wirings. In respective drawings of Fig. 2, X-axis represents time. The power supply device is mounted in a mobile body, e.g. a vehicle, and is formed of main power supply 17 that can be charged and discharged, electrical generator 11, DC/DC converter 23, electric storage section 29, output voltage detecting circuit 31, control circuit 35, and detecting circuit 33 for detecting a voltage of the electric storage section.

Main power supply 17 is formed of, e.g. a lead battery. Electrical generator 11 includes output terminal 13 and grounding terminal 22, and is connected via the power-carrying wirings to main power supply 17 at output terminal 13. Electrical generator 11 produces regenerated electric power during a speed reduction of the vehicle. To be more specific, electrical generator 11 is connected to an engine (not shown) mechanically, so that it produces electric power in response to the rotation of the engine.

Output voltage Vd from electrical generator 11 at output terminal 13 is set by a signal, i.e. adjusting voltage Va, supplied from vehicle-side control circuit 37. In this embodiment, adjusting voltage Va is formed of two values, namely, first predetermined output voltage Vdc1 and second predetermined output voltage Vdc2. First predetermined output voltage Vdc1 is set at 15V, and second predetermined output voltage Vdc2 is set at 13V. Vehicle-side control circuit 37 thus works as an adjusting voltage control section that supplies adjusting voltage Va to electrical generator 11 for adjusting output voltage Vd at output terminal 13 of electrical generator 11. Alternatively, control circuit 35 or another control section disposed at a different place receives a signal supplied from vehicle-side control circuit 37, and then supplies adjusting voltage Va to electrical generator 11.

Further, output terminal 13 is electrically hooked up with load 19 and starter 21 via the power-carrying wirings. Load 19 represents a variety of accessories mounted in the vehicle, and starter 21 represents a motor for starting the engine. An ignition switch (not shown) controls the start or stop of starter 21. Grounding terminal 22 of electrical generator 11 is electrically connected to the ground at the vehicle side.

DC/DC converter 23 includes a first end, i.e. input/output terminal 25, and a second end, i.e. electric storage section terminal 27, and is electrically connected via the power-carrying wirings to output terminal 13 of electrical generator 11 at input/output terminal 25. Electric storage section 29 is electrically connected to electric storage section terminal 27 of DC/DC converter 23. Electric storage section 29 is formed of four capacitors connected in series. Each one of those capacitors is an electric double layer capacitor and has a rated voltage of 2.5V In this case, electric storage section 29 has an upper limit voltage Vcu of 10V, while a lower limit voltage Vck is set at 5V because the withstand current of DC/DC converter 23 is taken into consideration. Electric storage section 29 thus changes its voltage Vc within a range from 5V to 10V

Output voltage Vd can be varied by adjusting voltage Va within a range from 13V to 15V, so that a voltage at input/output terminal 25 of DC/DC converter 23 can vary within the same range. A voltage at electric storage section terminal 27 represents voltage Vc of electric storage section 29 and varies within a range from 5V to 10V DC/DC converter 23 thus lowers the voltage at input/output terminal 25 for charging electric storage section 29, and also raises voltage Vc of electric storage section 29 for discharging storage section 29 from input/output terminal 25. Converter 23 thus has a bi-directional converter configuration.

Output voltage detecting circuit 31 is electrically connected between output terminal 13 and grounding terminal 22 of electrical generator 11 directly via the signal-carrying wirings, and it detects output voltage Vd at output terminal 13. This structure allows circuit 31 to accurately detect output voltage Vd, relative to grounding terminal 22, free from influences of internal resistance values in the respective wirings.

Electric-storage section voltage detecting circuit 33 is connected between both the ends of electric storage section 29, i.e. between terminal 27 and the grounding, via the signal-carrying wirings, and detecting circuit 33 detects voltage Vc of storage section 29, and then inputs the voltage Vc to control circuit 35. In other words, detecting circuit 33 is electrically connected to electric storage section 29 and control circuit 35 and detects voltage Vc of storage section 29.

DC/DC converter 23, output voltage detecting circuit 31, electric-storage section voltage detecting circuit 33, and vehicle-side control circuit 37 are electrically connected to control circuit 35 via the signal-carrying wirings. In other words, control circuit 35 is electrically connected to DC/DC converter 23 and output voltage detecting circuit 31. Control circuit 35 outputs a control signal (cont) for converter 23 based on output voltage Vd detected by circuit 31, voltage Vc detected by circuit 33, and regeneration signal (reg) supplied from vehicle-side control circuit 37. Control circuit 35 is formed of a comparison circuit that compares output voltage Vd and voltage Vc of storage section 29 with their reference signals, a logic circuit, a pulse-wave generating circuit that switches DC/DC converter 23, and the like. Control circuit 35 can be also formed of a digital circuit including a microprocessor and its peripheral circuit.

Next, the operation of the power supply device discussed above is demonstrated hereinafter with reference to Figs. 2A - 2E. In the following description, "travel of the vehicle" is defined as the vehicle being in one of the following traveling states: "accelerated travel", "travel at a constant speed", or "decelerated travel (inertia travel) without applying the break". Decelerated travel involving the application of the break by a driver is defined as "braking".

As shown in Fig. 2A, the vehicle starts traveling at time "t0", and increases the speed with time. Rotation of the engine prompts electrical generator 11 to generate electric power involving fuel consumption. Vehicle-side control circuit 37 outputs adjusting voltage Va of which value is in response to the travel and the braking of the vehicle. As shown in Fig. 2B, adjusting voltage Va stands at 13V during the travel. At this time, as shown in Fig. 2C, output voltage Vd from electrical generator 11 is controlled by adjusting voltage Va such that it can stands at second predetermined output voltage Vdc2 (13V).

From the time "t0" to time "t1" at which the acceleration ends, the vehicle travels, so that, as shown in Fig. 2B, adjusting voltage Va of 13V is supplied to electrical generator 11, which is then controlled such that the output voltage Vd become 13V As a result, as shown in Fig. 2C, output voltage Vd stays at 13V from time "t0" to time "t1".

At time "t0", as shown in Fig. 2E, electric storage section 29 is discharged, and voltage Vc is lower limit voltage Vck (5V). DC/DC converter 23 controls the voltage Vc for electric storage section 29 not to be further discharged. In other words, converter 23 controls the voltage at electric-storage section terminal 27. The control target, i.e. reference voltage Vst, is the lower limit voltage Vck.

At this time, DC/DC converter 23 is supposed to control a voltage (output voltage Vd) at input/output terminal 25 to be second predetermined output voltage Vdc2 (13V); however, when voltage Vc reaches the upper limit voltage Vcu (10V) or lowers to the lower limit voltage Vck (5V), converter 23 controls voltage Vc to stay at voltage Vcu or voltage Vck in order to prevent electric storage section 29 from being over-charged or over-discharged. If voltage Vc of electric storage section 29 is lowered too much, the efficiency of converter 23 is lowered. Therefore,the lower limit voltage Vck is set to avoid this reduction in efficiency. DC/DC converter 23 thus will not control the voltage (output voltage Vd) at input/output terminal 25, but output voltage Vd can be determined only by adjusting voltage Va. The wide dotted line drawn from time "t0" to time "t1" shown in Fig. 2D indicates the reference voltage Vst relative to the voltage at input/output terminal 25, where this voltage is supposed to be controlled originally. To be more specific, from time "t0" to time "t1" in Fig. 2D, output voltage Vd is supposed to be controlled originally at upper control voltage Vdu (=13.1V) which is described later. However, since voltage Vc stands at lower limit voltage Vck, converter 23 controls voltage Vc to stay at lower limit voltage Vck. The wide dotted line drawn in Fig. 2D after time "t1" has the same meaning, namely, this wide dotted line indicates reference voltage Vst relative to the voltage at input/output terminal 25 supposed to be controlled originally.

Subsequently, the driver starts applying the brakes to the vehicle at time "t1" in Fig. 2A, and electrical generator 11 produces regenerated electric power and at the same time vehicle-side control circuit 37 supplies regeneration signal "reg" to control circuit 35. Vehicle-side control circuit 37 turns the regeneration signal ON based on a vehicle speed signal and at least one of a braking signal, fuel injection signal, and accelerator signal. In a case where vehicle-side control circuit 37 produces the regeneration signal based on a vehicle speed signal and the braking signal, the following two conditions are satisfied: the vehicle speed signal indicates that the vehicle is in speed reduction state according to the vehicle speed signal, and the braking signal is turned ON by applying the brake. In a similar way, when vehicle-side control circuit 37 produces the regeneration signal based on the vehicle speed signal and fuel injection signal, the following two conditions are satisfied: the vehicle is in speed reduction state according to the vehicle speed signal, and the accelerator pedal is not stepped on and the fuel injection signal is turned OFF. In a case where control circuit 37 produces the regeneration signal based on the vehicle speed signal and the accelerator signal, the accelerator signal is turned OFF although the vehicle speed signal indicates that the vehicle is in an accelerated state. In other words, when the vehicle travels on a downhill road, circuit 37 produces the regeneration signal. The regeneration signal can be also produced based on any three signals out of the vehicle speed signal, braking signal, fuel injection signal, and accelerator signal, or it can be produced based on all those signals. The braking signal can be an ON/OFF signal of the brake pedal or a brake oil-pressure signal. In this embodiment, those signals are collectively called the braking signal.

Vehicle-side control circuit 37 works as an adjusting voltage control section, and as shown in Fig. 2B, it adjusts adjusting voltage Va of electrical generator 11 to 15V Electrical generator 11 thus tries to raise its output voltage Vd to 15V; however, DC/DC converter 23 switches the control target to output voltage Vd at the same time, namely, converter 23 controls the voltage at input/output terminal 25. Reference voltage Vst thus becomes lower control voltage Vdk as shown in Fig. 2D.

The lower control voltage Vdk refers to a voltage lower than first predetermined output voltage Vdc1 by first predetermined voltage range ΔV1. Lower control voltage Vdk is set such that main power supply 17 can be charged maximally with the regenerated electric power. To be more specific, it is preferably determined in the following way:

In the first place, first predetermined voltage range ΔV1 is determined as total error range ΔVer that is a total of the maximum error range of the output voltage from electrical generator 11 and the maximum control error range of the voltage of DC/DC converter 23. The latter range includes a detection error of output voltage detecting circuit 31. For instance, the former range is approx. 0.05V, and the latter range is approx. 0.05V, then the total error range ΔVer turns out 0.1V Lower control voltage Vdk is thus determined lower than first predetermined output voltage Vdc1 (15V) by first predetermined voltage range ΔV1 (0.1V), i.e. lower control voltage Vdk is determined 14.9V.

DC/DC converter 23 sets reference voltage Vst at lower control voltage Vdk as discussed above. Converter 23 thus works to lower the output voltage Vd to lower control voltage Vdk (14.9V) while electrical generator 11 tries to raise its output voltage Vd to 15V As a result, converter 23 charges electric storage section 29. As shown in Fig. 2C, this mechanism allows output voltage Vd to stay at lower control voltage Vdk from time "t1" to time "t2" during the braking. Since electric storage section 29 is charged with the regenerated electric power as discussed above, electric-storage section voltage Vc rises with time from time "t1" until time "t2".

On the other hand, output voltage Vd stands at 14.9V as shown in Fig. 2C, and it is thus higher than open circuit voltage of 13V of main power supply 17, which is thus charged with the regenerated electric power too. In general, a large amount of electric current of the regenerated electric power is absorbed in a greater amount by electric storage section 29, which is formed of capacitors, than by main power supply 17 formed of storage batteries. For this reason, lower control voltage Vdk is generally set at approx. 14V; however, in this embodiment, voltage Vdk is set at 14.9V Since output voltage Vd in regeneration is rather higher as discussed above, a charged amount to main power supply 17 increases, so that main power supply 17 is charged with a greater amount than in a general case, and electric storage section 29 is charged with a smaller amount than in a general case. As a result, a charged amount of the regenerated electric power directly to main power supply 17 increases, and an amount charged from electric storage section 29 to main power supply 17 decreases, so that a smaller amount of electric power flows through DC/DC converter 23 that incurs a large amount of heat loss, and the total efficiency of the vehicle is thus improved.

Some electric double layer capacitors employed in electric storage section 29 or some components of DC/DC converter 23 don't have enough thermal resistance against heat generated in an engine room where electrical generator 11 is disposed. It is thus necessary for electric storage section 29 and converter 23 of the power supply device to be disposed in a place avoiding a high temperature, e.g. the cabin or the trunk of the vehicle. This placement requires a long wiring between electrical generator 11 and converter 23, and in a case of charging electric storage section 29 with the max. current when the regenerated electric power is produced, the resistance in this wiring incurs heat loss. For instance, when the resistance in the wiring is 0.02Ω and the max. current is 100A at the production of the regenerated electric power, the heat loss amounts to as much as 200W.

In the case where electric storage section 29 is charged with a smaller amount of electricity at the production of regenerated electric power as discussed previously, the heat loss can less affect the efficiency of the vehicle together with the smaller heat loss produced in DC/DC converter 23. As a result, although the long wiring is needed between electrical generator 11 and converter 23, the power supply device can work efficiently.

Since electric storage section 29 is formed of electric double layer capacitors that are excellent in quick charge/discharge characteristics, it can be easily charged with an amount of sudden transition although the transition is steep at an initial time, i.e. time "t1", of production of the regenerated electric power. A recovery ratio as a total is thus improved.

It is preferable that lower control voltage Vdk is as close as possible to first predetermined output voltage Vdc1 in order to make effective use of the regenerated electric power efficiently with the foregoing control method. However, if voltage Vdk is excessively close to voltage Vdc1, output voltage Vd possibly exceeds first predetermined output voltage Vdc1 due to a variation in output voltage Vd or a control error of converter 23. In such a case, electric storage section 29 cannot be charged although the regenerated electric power is produced, but also electric storage section 29 discharges electric power which thus flows backward. Because of the foregoing reason, lower control voltage Vdk is set lower than first predetermined output voltage Vdc1 by first predetermined voltage range ΔV1. Here, lower control voltage Vdk is set such that the regenerated electric power can be charged maximally into main power supply 17. In particular, first predetermined voltage range ΔV1 is preferably set at total error range ΔVer. This setting allows reducing the backward flow from electric storage section 29, and charging the regenerated electric power as much as possible into main power supply 17, so that the efficiency as a total can be improved. First predetermined voltage range ΔV1 can be determined a greater value than total error range ΔVer, however, it is preferable to set first predetermined voltage range ΔV1 close to total error range ΔVer in order to charge the regenerated electric power as much as possible into main power supply 17 as well as reduce the heat loss.

The voltage control discussed above requires a direct connection of output voltage detecting circuit 31 to both of output terminal 13 and grounding terminal 22. This connection allows detecting output voltage Vd without the influence of the resistance of power-carrying wirings between electrical generator 11 and converter 23. This accurately detected output voltage Vd allows converter 23 to be controlled such that first predetermined voltage range ΔV1 can be accurate enough on the order of 0.1V. This accurate control thus allows main power supply 17 to be charged with the regenerated electric power as much as possible, and the electric current running through converter 23 can be reduced, so that the heat loss can be lowered. As a result, the efficiency of the power supply device can be improved.

The description is now returned to time "t2" and onward shown in Figs. 2A-2E. At time "t2" during the braking, as shown in Fig. 2E, voltage Vc of electric storage section 29 reaches upper limit voltage Vcu (10V). DC/DC converter 23 thus controls voltage Vc to stay at upper limit voltage Vcu as shown in Fig. 2D in order to prevent electric storage section 29 from being over-charged. In other words, converter 23 controls voltage Vc, detected by electric-storage-section voltage detecting circuit 33, at electric-storage-section terminal 27. As a result, output voltage Vd, i.e. the voltage at input/output terminal 25, is not anymore the control target for converter 23. Then output voltage Vd at time "t2" as shown in Fig. 2C is controlled by adjusting voltage Va to become first predetermined output voltage Vdc1 (15V), and the regenerated electric power is not only charged into main power supply 17 but also supplied to load 19.

Next, the vehicle is accelerated again to travel at time "t3" as shown in Fig. 2A, regeneration signal (reg) is then turned OFF. Adjusting voltage Va then returns to second predetermined output voltage Vdc2 (13V) as shown in Fig. 2B. At this time, DC/DC converter 23 switches reference voltage Vst to upper control voltage Vdu (13.1V) as shown in Fig. 2D in order to discharge the regenerated electric power stored in electric storage section 29. Converter 23 then controls output voltage Vd to be the same value as upper control voltage Vdu.

Upper control voltage Vdu indicates a voltage higher than second predetermined output voltage Vdc2 by second predetermined voltage range ΔV2, and is close to the voltage of main power supply 17. Voltage Vdu is set at a value which allows electric storage section 29 to discharge. Upper control voltage Vdu is preferably determined in the following way:

In the first place, second predetermined voltage range ΔV2 is found as total error range Ver (0.1V). Based on the value, upper control voltage Vdu is determined higher than second predetermined output voltage Vdc2 (13V) by second predetermined voltage range ΔV2 (0.1V), namely, upper control voltage Vdu is determined to be 13.1V

Reference voltage Vst is thus set at upper control voltage Vdu as discussed above, then DC/DC converter 23 tries to set output voltage Vd, which is about to be lowered to 13V by electrical generator 11, at upper control voltage Vdu (13.1V). As a result, converter 23 discharges the regenerated electric power stored in electric storage section 29. As a result, as shown in Fig. 2C, output voltage Vd can be maintained at upper control voltage Vdu during the travel from time "t3" to time "t4". Since electric storage section 29 is discharged as discussed above, voltage Vc of storage section 29 lowers with time from time "t3" to time "t4" as shown in Fig. 2E.

In general, upper control voltage Vdu is set at approx. 14V, i.e. an intermediate between first predetermined output voltage Vdc1 and second predetermined output voltage Vdc2 in order to give a priority to the discharge from electric storage section 29. In this embodiment, however, upper control voltage Vdu is set at 13.1V that is lower than the intermediate one. This setting of upper control voltage Vdu as low as at 13.1V from time "t3" to time "t4" allows reducing an amount of the regenerated electric power, tentatively stored in electric storage section 29, to be charged into main power supply 17, so that the regenerated electric power is supplied mainly to load 19 instead. The loss due to internal resistance in main power supply 17 can be thus minimized when electric storage section 29 charges main power supply 17 with the regenerated electric power. The foregoing voltage control method employed in discharging electric storage section 29 assists the power supply device in working more efficiently in addition to the increase in directly charged amount of the regenerated electric power into main power supply 17.

It is preferable to set upper control voltage Vdu at a value as close as possible to second predetermined output voltage Vdc2 in order to implement the foregoing voltage control for the better efficiency. However, setting at a value excessively close to voltage Vdc2 possibly causes output voltage Vd to be lower than second predetermined output voltage Vdc2 because of the variation in output voltage Vd or control error of DC/DC converter 23. In such a case, electric storage section 29 is charged with the electric power generated by electrical generator 11 while it discharges the regenerated electric power. At this time, since the vehicle is not applied with the brake, it consumes fuel for generating electric power, thereby lowering the fuel efficiency. Because of the reasons discussed above, upper control voltage Vdu is set higher than second predetermined output voltage Vdc2 by second predetermined voltage range ΔV2, which is set as narrow as possible. The foregoing voltage setting method allows setting upper control voltage Vdu at a value enabling electric storage section 29 to discharge and also as close as the voltage of main power supply 17. To be more specific, for instance, second predetermined voltage range ΔV2 is set at total error range ΔVer, whereby the possibility of charging electric storage section 29 can be decreased while the regenerated electric power stored in storage section 29 is supplied to load 19 as much as possible instead of being used for charging main power supply 17. As a result, the total efficiency can be improved.

Second predetermined output voltage range ΔV2 can be determined greater than total error range ΔVer; however, in order to reduce as much as possible the charging from electric storage section 29 to main power supply 17 as discussed above, second predetermined voltage range ΔV2 is preferably set closer to total error range ΔVer.

In the previous discussion, first predetermined voltage range ΔV1 is set equal to second predetermined voltage range ΔV2; however, the present invention is not limited to this instance. For instance, in a case where an accuracy of output voltage detecting circuit 34 changes in response to an absolute value of the voltage, or in a case where a control accuracy by converter 23 over electric storage section 29 while it is charged differs from a control accuracy over storage section 29 while it is discharged, first predetermined voltage range ΔV1 and second predetermined voltage range ΔV2 can be set independently and appropriately in response to the respective cases.

Then as shown in Fig. 2E, when voltage Vc reaches lower limit voltage Vc at time "t4", reference voltage Vst switches to lower limit voltage Vck as shown in Fig. 2D. As a result, DC/DC converter 23 keeps voltage Vc at lower limit voltage Vck after time "t4". At the same time, converter 23 is not anymore involved in controlling output voltage Vd, so that output voltage Vd becomes second predetermined output voltage Vdc2 (13V) as shown in Fig. 2C. This state is identical to that at time "t0" and onward. The operation discussed above is repeated for the regenerated electric power to be charged and discharged, thereby improving the efficiency in total.

As discussed above, the power supply device in accordance with the first embodiment allows vehicle-side control circuit 37, which works as an adjusting voltage control section, to set adjusting voltage Va at first predetermined output voltage Vdc1 at the timing when electrical generator 11 starts producing the regenerated electric power, i.e. at the time when the brakes is applied. Control circuit 35 controls DC/DC converter 23 such that output voltage Vd becomes lower control voltage Vdk that is lower than first predetermined output voltage Vdc1 by first predetermined voltage range ΔV1.

Since lower control voltage Vdk is set at a value which allows main power supply 17 to be charged maximally with the regenerated electric power, the amount of the regenerated electric power directly charged to main power supply 17 increases, while an amount thereof charged to electric storage section 29 decreases. As a result, an amount of the electric power traveling through DC/DC converter 23 decreases. The electric power traveling through DC/DC converter 23 incurs a great amount of heat loss. The efficiency of the vehicle in total can be thus improved.

On the other hand, vehicle-side control circuit 37 sets adjusting voltage Va at second predetermined output voltage Vdc2, which is lower than first predetermined output voltage Vdc1, at the timing when electrical generator 11 ends the production of the regenerated electric power, i.e. at the end of braking. Control circuit 35 controls converter 23 such that output voltage Vd becomes upper control voltage Vdu that is higher than second predetermined output voltage Vdc2 by second predetermined voltage range ΔV2.

In this mechanism, upper control voltage Vdu is preferably set at a voltage which enables electric storage section 29 to discharge and also as close as the voltage of main power supply 17. This setting allows reducing the possibility of charging electric storage section 29, while the regenerated electric power stored in storage section 29 can be supplied as much as possible to load 19 instead of being used for charging main power supply 17. As a result, the efficiency in total can be improved.

This embodiment refers to the case where electric storage section 29 is fully charged during the braking. If a period of the braking is too short for storage section 29 to be fully charged, the operation moves immediately to the one at time "t3" although voltage Vc does not yet reach upper limit voltage Vcu, and discharges electric storage section 29. This mechanism assists in supplying the regenerated electric power even in some small amount to load 19, so that the efficiency can be improved.

This embodiment also refers to the case where voltage Vc reaches lower limit voltage Vck during the travel of vehicle from time "t3 to time "t4 as shown in Fig. 2E. However, if the traveling period is too short, the brake is applied before storage section 29 discharges down to lower limit voltage Vck. In this case, the operation at time "t1" is carried out immediately for charging both of main power supply 17 and storage section 29 with the regenerated electric power. This mechanism allows recovering the regenerated electric power even in some small amount until voltage Vc reaches upper limit voltage Vcu, thereby improving the efficiency.

### Exemplary Embodiment 2

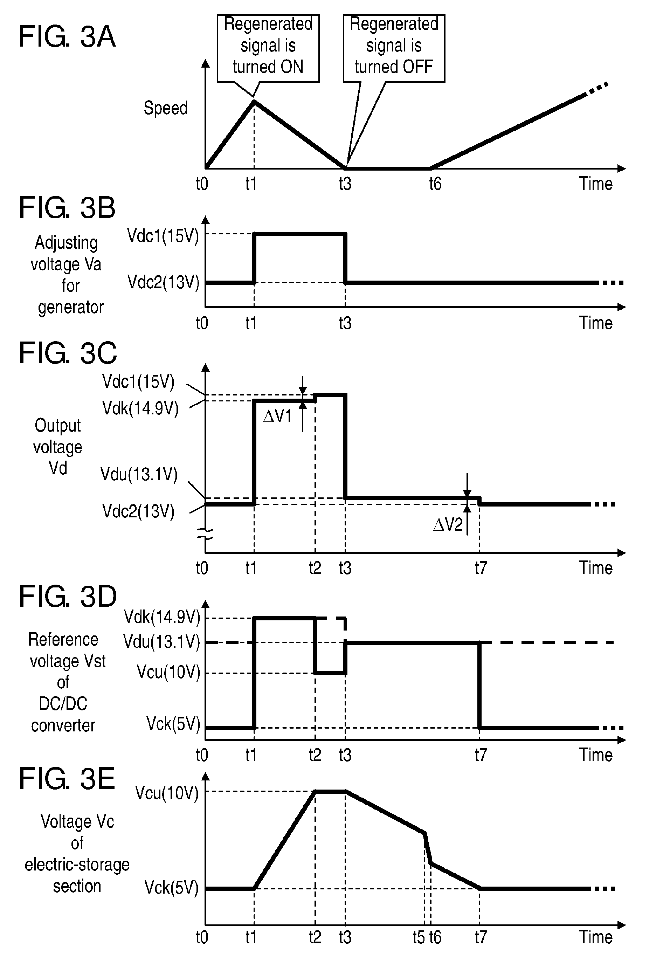

Figs. 3A - 3E show variations with time of respective characteristics of the power supply device in accordance with the second embodiment of the present invention. Fig. 3A shows a vehicle speed variation with time, Fig. 3B shows a variation with time of adjusting voltage Va of the electrical generator, Fig. 3C shows a variation with time of output voltage Vd from the electrical generator, Fig. 3D shows a variation with time of reference voltage Vst of the DC/DC converter, and Fig. 3E shows a variation with time of electric-storage section voltage Vc of an electric storage section.

In the present embodiment, the power supply device is mounted in an idling-stop vehicle, and its featuring operation is demonstrated hereinafter. The power supply device in accordance with the present embodiment has the same structure as the power supply device in accordance with the first embodiment shown in Fig. 1, so that detailed description of the structure is omitted here. In Fig. 3, the operation from time "t0" to time "t3" stays the same as that of the first embodiment.

As shown in Fig. 3A, when the vehicle halts at time "t3", the engine also halts and is thrown into an idling-stop state. In this case, control circuit 35 works in the same manner as that at time "t3" shown in Fig. 2. This control allows the regenerated electric power stored in electric storage section 29 to be discharged mainly to load 19, so that an amount of the charge to main power supply device 17 can be reduced as much as possible. Load 19 can be thus kept being driven by the electric power supplied from storage section 29 even in the idling-stop state, and the efficiency can be improved. Since the engine is kept halted during the period from time "t3" to time "t5", electrical generator 11 does not produce electric power. However, the vehicle is not in the braking state during this period, vehicle-side control circuit 37 switches adjusting voltage Va to second predetermined output voltage Vdc2 as shown in Fig. 3B.

Next, the driver of the vehicle moves (switches) his foot from the brake pedal to the accelerator pedal (both are not shown) and makes the vehicle travel. Vehicle-side control circuit 37 detects this switch of the pedals, and then immediately controls an engine start-up circuit (not shown) so as to drive starter 21. At this time, DC/DC converter 23 controls output voltage Vd to be upper control voltage Vdu (13.1V) as shown in Fig. 3C. This voltage is higher than the open circuit voltage (13V) of main power supply 17, so that electric storage section 29 supplies the electric power to starter 21 via converter 23. Starter 21 thus receives a large amount of current, temporarily, e.g. several-hundred amperes, and voltage Vc sharply lowers from time "t5" to time "t6" as shown in Fig. 3E. However, voltage Vc does not yet reach lower limit voltage Vck (5V), so that output voltage Vd is kept at upper control voltage Vdu (13.1V).

At time "t6", the drive of starter 21 ends, and the engine restarts, then the vehicle starts traveling as shown in Fig. 3A. At this time, voltage Vc does not yet reach lower limit voltage Vck, so that voltage Vc lowers with time at the same slant as that between time "t3" and time "t5" provided that load 19 keeps consuming the same amount of electric power. During this period, the operation stays the same as that between time "t3" and time "t4" shown in Fig. 2, so that the electric storage section 29 is controlled not to charge main power supply 17 as much as possible. As a result, the efficiency can be improved as the first embodiment proves.

Next, when voltage Vc reaches lower limit voltage Vck at time "t7", converter 23 changes its control target from output voltage Vd to voltage Vc, and controls voltage Vc to be kept at lower limit voltage Vck. This operation is the same as that at time "t4" shown in Fig. 2, and it allows reducing the possibility of over-discharge from electric storage section 29. This operation also allows electrical generator 11 to control the power generation with second predetermined output voltage Vdc2 (13V), so that the power generation by electrical generator 11 can be halted between time "t6" and time "t7" for saving fuel.

At time "t7" and onward, voltage Vc is kept at lower limit voltage Vck until regeneration signal "reg" is turned on. The operation at time "t7" and onward is the same as that at time "t0", so that similar operations to what are discussed previously are repeated.

Even when the power supply device is mounted in the idling-stop vehicle, the structure and operation discussed previously prove that this power supply device can improve the efficiency in total.

As discussed in the present embodiment, use of the power supply device in the idling-stop vehicle allows increasing the possibility of discharging the regenerated electric power stored in electric storage section 29 down to lower limit voltage Vck with the aid of starter 21. The regenerated electric power thus can be more effectively used, and a greater possible amount of the regenerated electric power can be charged at the next braking. The recovery efficiency of the regenerated electric power thus can be further increased. The idling-stop vehicle stops the engine while the vehicle halts, so that the fuel is not consumed during this period. The idling-stop vehicle equipped with the power supply device in accordance with this embodiment allows increasing the efficiency of the vehicle in total and saving the fuel.

### Exemplary Embodiment 3

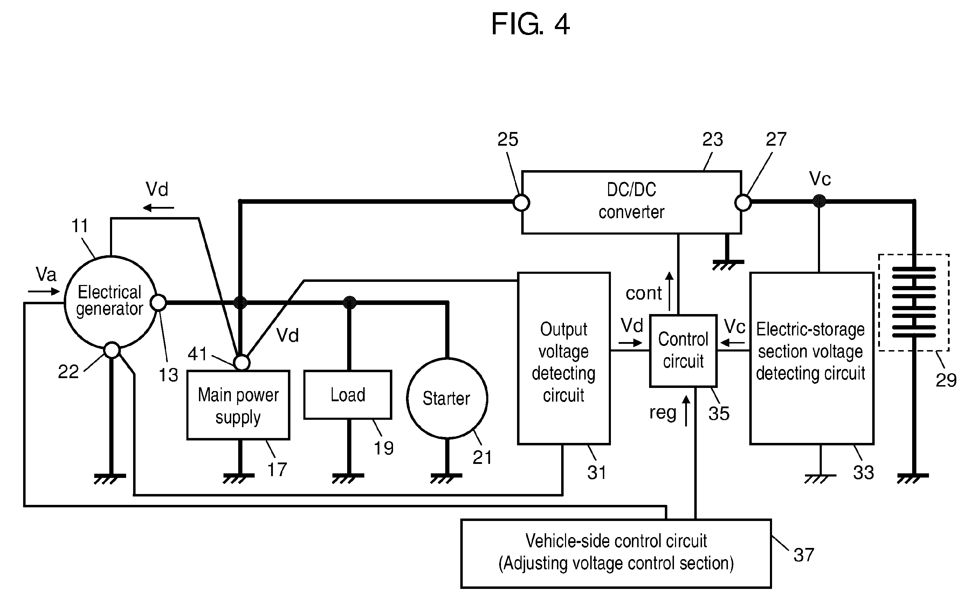

Fig. 4 is a block diagram of the power supply device in accordance with the third embodiment of the present invention. In Fig. 4, a wide line indicates a power-carrying wiring, and a narrow line indicates a signal-carrying wiring. In Fig. 4, similar elements to those in Fig. 1 have the same reference signs and the detailed descriptions thereof are omitted here. The third embodiment differs from the first one in the following two points:
(1) adjustment terminal 41 is disposed at a circuit portion which is electrically connected to electrical generator 11 and of which voltage is a control target for electrical generator 11. In the present embodiment, a voltage control target of a circuit portion for electrical generator 11 is a positive electrode terminal of main power supply 17. Electrical generator 11 thus controls the voltage at adjustment terminal 41, i.e. the voltage at the positive electrode of main power supply 17, to be adjusting voltage Va. Therefore, output voltage Vd discussed in the first and second embodiments corresponds to the voltage at adjustment terminal 41. Adjusting voltage Va discussed in the first and second embodiments works for adjusting the voltage at output terminal 13; however, in the present embodiment, adjusting voltage Va works for adjusting the voltage at adjustment terminal 41 instead.
(2) Output voltage detecting circuit 31 is electrically and directly connected to adjustment terminal 41 instead of output terminal 13, and also connected electrically and directly to grounding terminal 22 for detecting the voltage at adjustment terminal 41 as output voltage Vd.

Structures other than the foregoing two points stay the same as those in accordance with the first embodiment shown in Fig. 1. The power supply device in accordance with the present embodiment operates in the same manner as that in the first embodiment shown in Figs. 2A - 2E, and as that in the second embodiment shown in Figs. 3A - 3E, so that detailed description thereof is omitted here.

There is wiring resistance between output terminal 13 and adjustment terminal 41. This wiring resistance can incur a voltage drop, which causes DC/DC converter 23 to make a control error when the following conditions are established: Electrical generator 11 controls the voltage, i.e. output voltage Vd, at adjustment terminal 41 with adjusting voltage Va as shown in Fig. 4, and output detecting circuit 31 detects the voltage at output terminal 13 as shown in Fig. 1. This control error cannot be neglected in the case where output voltage Vd is controlled as accurately as on the order of 0.1V as shown in Figs. 2C and 3C. This control error thus may adversely affect the control aiming at efficient operation. For the better efficiency, output voltage detecting circuit 31 thus preferably detects a voltage of the circuit portion of which voltage is a control target for electrical generator 11. In other words, output voltage detecting circuit 31 desirably detects the voltage at adjustment terminal 41. To achieve this detection, output voltage detecting circuit 31 is configured to detect the voltage at adjustment terminal 41 as output voltage Vd. This configuration allows forming an efficient power supply device even if electrical generator 11 is electrically connected to adjustment terminal 41. The preferable structures and controls discussed in the first and second embodiments can be applicable to this third embodiment.

Fig. 4 refers to the structure where adjustment terminal 41 is disposed at the positive electrode terminal of main power supply 17; however, the present invention is not limited to this structure. For instance, adjustment terminal 41 can be disposed in another circuit portion at a junction between electrical generator 11 and main power supply 17. In such a case, output voltage detecting circuit 31 can be connected to adjustment terminal 41 so that an efficient control can also be achieved. The structure and control discussed above allow providing the power supply device that can improve the total efficiency even when electrical generator 11 is electrically connected to adjustment terminal 41 and electrical generator 11 controls the voltage (i.e. output voltage Vd) at adjustment terminal 41 to be adjusting voltage Va.

Embodiments 1 - 3 refer to the case where voltage Vc is always kept higher than lower limit voltage Vck (5V); however, if electric storage section 29 is discharged due to its internal resistance when the vehicle stays in a storage state, voltage Vc may stand lower than lower limit voltage Vck at the next starting time. In such a case, control circuit 35 can control converter 23 such that electric storage section 29 is charged until voltage Vc rises up to lower limit voltage Vck after the start of the engine.

In embodiments 1 - 3 the regeneration signal "reg" is turned on or off in response to stepping-on or releasing the brake pedal of the driver; however, regeneration signal "reg" can be turned on or off in response to a fuel cut signal. In this case, electric storage section 29 can be charged with the regenerated electric power during the inertial traveling of the vehicle, so that the recovery efficiency can be further improved. However, in such a case, the recovery of the regenerated electric power invites increment in mechanical load of electrical generator 11 onto the engine, so that the inertial traveling distance can be shorter. Whether or not the regenerated electric power should be recovered during the inertial traveling, or how much the regenerated electric power should be recovered can be determined depending on which one the user gives the priority to traveling distance or recovery amount.

Embodiments 1 - 3 also refer to control circuit 35 that controls converter 23 to maintain voltage Vc at upper limit voltage Vcu when voltage Vc reaches upper limit voltage Vcu, and controls converter 23 to maintain voltage Vc at lower limit voltage Vck when voltage Vc reaches lower limit voltage Vck. However, there is a case where the control by using upper limit voltage Vcu or lower limit voltage Vck is not always needed. To be more specific, such control is not needed for a vehicle system where electric storage section 29 has a great enough capacity comparing with an amount of regenerated electric power obtained at one braking or an amount of electric power consumed by load 19, and the amount of regenerated electric power is approx. equal to the amount of consumed electric power when the vehicle is operated. The foregoing vehicle system may not have electric-storage-section voltage detecting circuit 33. Therefore, electric-storage-section voltage detecting circuit 33 is not necessary.

Embodiments 1 - 3 refer to adjusting voltage Va that is changed in two steps. A signal representing this adjusting voltage Va can be either an analog signal or a digital signal; however, use of the analog signal possibly invites variation in adjusting voltage Va due to noises. It is thus preferable to use the digital signal that meets the communication standard for vehicles, and to input adjusting voltage Va in the form of the digital signal to electrical generator 11. This structure allows minimizing the adverse affect of the noises and transmitting accurately the adjusting voltage Va. As a result, the regenerated electric power can be positively recovered, and the efficiency can be improved.

Embodiments 1 - 3 refer to the structure where adjusting voltage Va is switched between first predetermined output voltage Vdc1 and second predetermined output voltage Vdc2, and this switching is done instantaneously as shown in Figs. 2B and 3B. However, some load 19 may operate unsteadily due to this steep change in voltage. It is thus preferable to switch adjusting voltage Va gradually according to a predetermined time-elapse switching function, which is a time function indicating a variation with time of a predetermined adjusting voltage Va. To be more specific, predetermined changing speed "v" (e.g. 1 - 2V/sec) is used as the predetermined time-elapse switching function for changing adjusting voltage Va. In this case, predetermined changing speed "v" switches adjusting voltage Va gradually to be first predetermined output voltage Vdc1 or to be second predetermined output voltage Vdc2. As a result, output voltage Vd is changed slowly according to predetermined changing speed "v", so that the possibility of unstable operation of load 19 can be reduced.

There are two ways for switching the adjusting voltage Va with predetermined changing speed "v": The first one is this: Vehicle-side control circuit 37 directly changes the signal of adjusting voltage Va according to predetermined changing speed "v". In a case where adjusting voltage Va is raised from second predetermined output voltage Vdc2 to first predetermined output voltage Vdc1, reference voltage Vst of converter 23 will not be switched also immediately to lower control voltage Vdk. Converter 23 is controlled such that reference voltage Vst becomes lower than adjusting voltage Va by first predetermined voltage range ΔV1. In this case, control circuit 35 controls reference voltage Vst to stay lower than adjusting voltage Va by first predetermined voltage range ΔV1 when adjusting voltage Va becomes higher than reference voltage Vst by first predetermined voltage range ΔV1. The foregoing control allows preventing a backward flow from electric storage section 29 to output terminal 13. The foregoing control also allows charging main power supply 17 and storage section 29 with the regenerated electric power at the earliest possible timing when the regenerated electric power is produced and while adjusting voltage Va is switched gradually according to predetermined changing speed "v". The regenerated electric power thus can be recovered efficiently.

In a similar way, in a case where the production of the regenerated electric power ends and adjusting voltage Va is lowered from first predetermined output voltage Vdc1 to second predetermined output voltage Vdc2, DC/DC converter 23 is controlled such that reference voltage Vst becomes higher than adjusting voltage Va by second predetermined voltage range ΔV2. In this case, control circuit 35 controls reference voltage Vst to stay higher than adjusting voltage Va by second predetermined voltage range ΔV2 when adjusting voltage Va becomes lower than reference voltage Vst by second predetermined voltage range ΔV2. The foregoing control allows preventing a backward charge from output terminal 13 to electric storage section 29. The foregoing control also allows discharging the regenerated electric power from storage section 29 at the earliest possible timing when the production of the regenerated electric power ends and while adjusting voltage Va is switched gradually according to predetermined changing speed "v". The regenerated electric power thus can be effectively used and a period of power generation in electrical generator 11 consuming the fuel by the engine can be shortened. As a result, the higher efficiency can be expected. In a case of employing the foregoing control method, it is necessary to use electrical generator 11 that can output a voltage in multi-steps.

Here is another method for switching adjusting voltage Va according to predetermined changing speed "v": In the first place, the following structure should be prepared: a signal of adjusting voltage Va supplied from vehicle-side control circuit 37 is input also to control circuit 35. Next, in a case where adjusting voltage Va rises from second predetermined output voltage Vdc2 to first predetermined output voltage Vdc1, for instance, control circuit 35 detects this change, and controls reference voltage Vst to be lower control voltage Vdk according to predetermined changing speed "v". As a result, output voltage Vd of converter 23 also rises to lower control voltage Vdk according to predetermined changing speed "v". In a similar way, in a case where adjusting voltage Va lowers from first predetermined output voltage Vdc1 to second predetermined output voltage Vdc2, control circuit 35 controls reference voltage Vst to become upper control voltage Vdu according to predetermined changing speed "v". The foregoing method also allows the adjusting voltage Va to be switched gradually according to predetermined changing speed "v".

The foregoing description refers to the use of predetermined changing speed "v" as the predetermined time-elapse switching function. In this case, there is a premise that adjusting voltage Va varies linearly relative to time; however, if a sharp change in the voltage of load 19 is desirably minimized, the predetermined time-elapse switching function is not to be a linear function relative to time, and it is preferable that adjusting voltage Va is slowly changed during an initial stage of the switching, and then the changing speed is increased. In other words, the predetermined time-elapse switching function can be a quadratic function, a higher-order function, or an exponential function. Here is another case for the predetermined time-elapse switching function, namely, it can have multiple predetermined changing speeds "v". Use of one of these predetermined time-elapse switching functions allows electrical generator 11 to change the amount of power generation moderately, so that the load to the engine can be reduced.

Embodiments 1 - 3 refer to the use of electric double layer capacitors for electric storage section 29; however, storage section 29 can be formed of electro-chemical capacitors, other capacitors, or a secondary battery.

Embodiments 1 - 3 refer to the case where the power supply device is employed in the vehicle; however, the present invention is not limited to this case, for example, the power supply device can be employed in construction equipment such as a crane, or mobile body such as an elevator, as long as they can generate the recovered electric power.

Embodiments 1 - 3 refer to load 19 or starter 21 electrically connected to output terminal 13 as power consuming accessories; however, they are not essential to the power supply device. To be more specific, in the idling-stop vehicle, for instance, electrical generator 11 works as a motor generator having a function of starter 21, and in a case where the regenerated electric power stored in electric storage section 29 can be consumed only by the motor generator, load 19 or starter 21 is not needed for the power supply device. In a similar way, in the case where the power supply device is employed in the construction equipment or the elevator, and the motor thereof produces the regenerated electric power, which is stored in electric storage section 29 and consumed only by the motor, then load 19 is not needed for this structure.

At time "t3" in Fig. 2B in accordance with the first embodiment, or at time "t3" in Fig. 3B in accordance with the second embodiment, adjusting voltage Va of electrical generator 11 is switched from first predetermined output voltage Vdc1 (15V) to second predetermined output voltage Vdc2 (13V). At this time, since main power supply 17 is slow to follow the voltage change, output voltage Vd takes maximally several seconds before it reaches upper control voltage Vdu (13.1V). However, the delay of this several seconds is so small relative to X-axis, i.e. time scale, that Figs. 2C and 3C depict as if output voltage Vd reaches from first predetermined output voltage Vdc1 instantly to upper control voltage Vdu.

### INDUSTRIAL APPLICABILITY

The power supply device of the present invention allows controlling the charge/discharge to/from the electric storage section for improving the efficiency in total. The power supply device is thus useful particularly as a power supply device that stores the regenerated electric power in the electric storage section while the brake is applied and discharges the regenerated electric power when necessary.

### REFERENCE MARKS IN THE DRAWINGS

- 11: electrical generator
- 13: output terminal
- 17: main power supply
- 19: load
- 21: starter
- 22: grounding terminal
- 23: DC/DC converter
- 25: input/output terminal
- 27: electric-storage section terminal
- 29: electric storage section
- 31: output voltage detecting circuit
- 33: electric-storage section voltage detecting circuit
- 35: control circuit
- 37: vehicle-side control circuit (adjusting voltage control section)
- 41: adjustment terminal

## Claims

1. A power supply device to be mounted in a mobile body, the device comprising:
a main power supply chargeable and dischargeable;
an electrical generator including an output terminal and a grounding terminal, and being connected to the main power supply at the output terminal, the electrical generator being configured to produce regenerated electric power when the mobile body is decelerated;
a DC/DC converter including a first end and a second end, and being connected electrically to the output terminal of the electrical generator at the first end;
an electric storage section connected electrically to the second end of the DC/DC converter;
an output voltage detecting circuit electrically and directly connected between the output terminal of the electrical generator and the grounding terminal of the electrical generator, the output voltage detecting circuit being configured to detect an output voltage (Vd) at the output terminal;
a control circuit connected electrically to both of the DC/DC converter and the output voltage detecting circuit; and
an adjusting voltage control section configured to supply an adjusting voltage (Va), which is used for adjusting the output voltage (Vd), to the electrical generator,
wherein the adjusting voltage control section sets the adjusting voltage (Va) at a first predetermined output voltage (Vdc1) at a timing when the electrical generator starts producing the regenerated electric power, and the control circuit controls the DC/DC converter such that the output voltage (Vd) becomes a lower control voltage (Vdk) lower than the first predetermined output voltage (Vdc1),
wherein the adjusting voltage control section sets the adjusting voltage (Va) at a second predetermined output voltage (Vdc2) that is lower than the first predetermined output voltage (Vdc1) at a timing when the electrical generator ends the production of the regenerated electric power, and the control circuit controls the DC/DC converter such that the output voltage (Vd) becomes an upper control voltage (Vdu) higher than the second predetermined output voltage (Vdc2), and
wherein the lower control voltage (Vdk) is set at a value which maximizes an amount of the regenerated electric power being charged into the main power supply.

2. The power supply device of claim 1, wherein the upper control voltage (Vdu) is set at a value as close as possible to a voltage of the main power supply while maintaining the electric storage section dischargeable.

3. The power supply device of claim 1 further comprising an electric-storage section voltage detecting circuit electrically connected to both of the electric storage section and the control circuit, the electric-storage section voltage detecting circuit being configured to detect a voltage (Vc) of the electric storage section,
wherein the control circuit controls the DC/DC converter to maintain the voltage (Vc) of the electric storage section at an upper limit voltage (Vcu) when the voltage (Vc) detected by the electric-storage section voltage detecting circuit reaches the upper limit voltage (Vcu), and controls the DC/DC converter to maintain the voltage (Vc) at a lower limit voltage (Vck) when the voltage (Vc) detected by the electric-storage section voltage detecting circuit reaches the lower limit voltage (Vck).

4. The power supply device of claim 1, wherein a first predetermined voltage range (ΔV1) representing a difference between the first predetermined output voltage (Vdc1) and the lower control voltage (Vdk), and a second predetermined voltage range (ΔV2) representing a difference between the upper control voltage (Vdu) and the second predetermined output voltage (Vdc2) are set at a total error range (ΔVer) that is a sum of a maximum error range of an output voltage from the electrical generator and a maximum error range in voltage control of the DC/DC converter.

5. The power supply device of claim 1, wherein the adjusting voltage control section inputs the adjusting voltage (Va) in form of a digital signal to the electrical generator.

6. The power supply device of claim 1, wherein the adjusting voltage control section switches the adjusting voltage (Va) between the first predetermined output voltage (Vdc1) and the second predetermined output voltage (Vdc2) gradually according to a predetermined time-elapse switching function.

7. The power supply device of claim 6, wherein a difference between the first predetermined output voltage (Vdc1) and the lower control voltage (Vdk) is defined as a first predetermined voltage range (ΔV1), and a difference between the upper control voltage (Vdu) and the second predetermined output voltage (Vdc2) is defined as a second predetermined voltage range (ΔV2),
in a case where the electrical generator starts producing the regenerated electric power, the adjusting voltage (Va) is raised gradually from the second predetermined output voltage (Vdc2) to the first predetermined output voltage (Vdc1) according to the predetermined time-elapse switching function, and the control circuit controls a reference voltage (Vst) of the DC/DC converter to be maintained lower than the adjusting voltage (Va) by the first predetermined voltage range (ΔV1) when the adjusting voltage (Va) becomes higher than the reference voltage (Vst) by the first predetermined voltage range (ΔV1), and
in a case where the production of the regenerated electric power ends, the adjusting voltage (Va) is lowered gradually from the first predetermined output voltage (Vdc1) to the second predetermined output voltage (Vdc2) according to the predetermined time-elapse switching function, and the control circuit controls the reference voltage (Vst) to be maintained higher than the adjusting voltage (Va) by the second predetermined voltage range (ΔV2) when the adjusting voltage (Va) becomes lower than the reference voltage (Vst) by the second predetermined voltage range (ΔV2).

8. A power supply device to be mounted in a mobile body, the device comprising:
a main power supply chargeable and dischargeable;
an electrical generator including an output terminal and a grounding terminal, and being connected to the main power supply at the output terminal, the electrical generator being configured to produce regenerated electric power when the mobile body is decelerated;
a DC/DC converter including a first end and a second end, and being connected electrically to the output terminal of the electrical generator at the first end;
an electric storage section connected electrically to the second end of the DC/DC converter;
an adjustment terminal connected electrically to the electrical generator and provided at a circuit portion that is a target for the electrical generator to control a voltage;
an output voltage detecting circuit electrically and directly connected between the adjustment terminal and the grounding terminal of the electrical generator, the output voltage detecting circuit being configured to detect an output voltage (Vd) that is used for adjusting a voltage at the adjustment terminal;
a control circuit connected electrically to both of the DC/DC converter and the output voltage detecting circuit; and
an adjusting voltage control section configured to supply an adjusting voltage (Va), which is used for adjusting the output voltage (Vd), to the electrical generator,
wherein the adjusting voltage control section sets the adjusting voltage (Va) at a first predetermined output voltage (Vdc1) at a timing when the electrical generator starts producing the regenerated electric power, and the control circuit controls the DC/DC converter such that the output voltage (Vd) becomes a lower control voltage (Vdk) lower than the first predetermined output voltage (Vdc1),
wherein the adjusting voltage control section sets the adjusting voltage (Va) at a second predetermined output voltage (Vdc2) that is lower than the first predetermined output voltage (Vdc1) at a timing when the electrical generator ends the production of the regenerated electric power, and the control circuit controls the DC/DC converter such that the output voltage (Vd) becomes an upper control voltage (Vdu) higher than the second predetermined output voltage (Vdc2), and
wherein the lower control voltage (Vdk) is set at a value which maximizes an amount of the regenerated electric power being charged into the main power supply.

9. The power supply device of claim 8, wherein the upper control voltage (Vdu) is set at a value as close as possible to a voltage of the main power supply while maintaining the electric storage section dischargeable.

10. The power supply device of claim 8 further comprising an electric-storage section voltage detecting circuit electrically connected to both of the electric storage section and the control circuit, the electric-storage section voltage detecting circuit being configured to detect a voltage (Vc) of the electric storage section,
wherein the control circuit controls the DC/DC converter to maintain the voltage (Vc) at an upper limit voltage (Vcu) when the voltage (Vc) detected by the electric-storage section voltage detecting circuit reaches the upper limit voltage (Vcu), and controls the DC/DC converter to maintain the voltage (Vc) at a lower limit voltage (Vck) when the voltage (Vc) detected by the electric-storage section voltage detecting circuit reaches the lower limit voltage (Vck).

11. The power supply device of claim 8, wherein a first predetermined voltage range (ΔV1) representing a difference between the first predetermined output voltage (Vdc1) and the lower control voltage (Vdk), and a second predetermined voltage range (ΔV2) representing a difference between the upper control voltage (Vdu) and the second predetermined output voltage (Vdc2) are set at a total error range (ΔVer) that is a sum of a maximum error range of an output voltage from the electrical generator and a maximum error range in voltage control of the DC/DC converter.

12. The power supply device of claim 1, wherein the adjusting voltage control section inputs the adjusting voltage (Va) in a form of a digital signal to the electrical generator.

13. The power supply device of claim 8, wherein the adjusting voltage control section switches the adjusting voltage (Va) between the first predetermined output voltage (Vdc1) and the second predetermined output voltage (Vdc2) gradually according to a predetermined time-elapse switching function.

14. The power supply device of claim 13, wherein a difference between the first predetermined output voltage (Vdc1) and the lower control voltage (Vdk) is defined as a first predetermined voltage range (ΔV1), and a difference between the upper control voltage (Vdu) and the second predetermined output voltage (Vdc2) is defined as a second predetermined voltage range (ΔV2),
in a case where the electrical generator starts producing the regenerated electric power, the adjusting voltage (Va) is raised gradually from the second predetermined output voltage (Vdc2) to the first predetermined output voltage (Vdc1) according to the predetermined time-elapse switching function, and the control circuit controls a reference voltage (Vst) of the DC/DC converter to be maintained lower than the adjusting voltage (Va) by the first predetermined voltage range (ΔV1) when the adjusting voltage (Va) becomes higher than the reference voltage (Vst) by the first predetermined voltage range (ΔV1), and
in a case where the production of the regenerated electric power ends, the adjusting voltage (Va) is lowered gradually from the first predetermined output voltage (Vdc1) to the second predetermined output voltage (Vdc2) according to the predetermined time-elapse switching function, and the control circuit controls the reference voltage (Vst) to be maintained higher than the adjusting voltage (Va) by the second predetermined voltage range (ΔV2) when the adjusting voltage (Va) becomes lower than the reference voltage (Vst) by the second predetermined voltage range (ΔV2).

## Amended claims

### Amended claims under Art. 19.1 PCT

1. A power supply device to be mounted in a mobile body, the device comprising:
a main power supply chargeable and dischargeable;
an electrical generator including an output terminal and a grounding terminal, and being connected to the main power supply at the output terminal, the electrical generator being configured to produce regenerated electric power when the mobile body is decelerated;
a DC/DC converter including a first end and a second end, and being connected electrically to the output terminal of the electrical generator at the first end;
an electric storage section connected electrically to the second end of the DC/DC converter;
an output voltage detecting circuit electrically and directly connected between the output terminal of the electrical generator and the grounding terminal of the electrical generator, the output voltage detecting circuit being configured to detect an output voltage (Vd) at the output terminal;
a control circuit connected electrically to both of the DC/DC converter and the output voltage detecting circuit; and
an adjusting voltage control section configured to supply an adjusting voltage (Va), which is used for adjusting the output voltage (Vd), to the electrical generator,
wherein the adjusting voltage control section sets the adjusting voltage (Va) at a first predetermined output voltage (Vdc1) at a timing when the electrical generator starts producing the regenerated electric power, and the control circuit controls the DC/DC converter such that the output voltage (Vd) becomes a lower control voltage (Vdk) lower than the first predetermined output voltage (Vdc1),
wherein the adjusting voltage control section sets the adjusting voltage (Va) at a second predetermined output voltage (Vdc2) that is lower than the first predetermined output voltage (Vdc1) at a timing when the electrical generator ends the production of the regenerated electric power, and the control circuit controls the DC/DC converter such that the output voltage (Vd) becomes an upper control voltage (Vdu) higher than the second predetermined output voltage (Vdc2), and
wherein the lower control voltage (Vdk) is set at a value which maximizes an amount of the regenerated electric power being charged into the main power supply.

2. The power supply device of claim 1, wherein the upper control voltage (Vdu) is set at a value as close as possible to a voltage of the main power supply while maintaining the electric storage section dischargeable.

3. The power supply device of claim 1 further comprising an electric-storage section voltage detecting circuit electrically connected to both of the electric storage section and the control circuit, the electric-storage section voltage detecting circuit being configured to detect a voltage (Vc) of the electric storage section,
wherein the control circuit controls the DC/DC converter to maintain the voltage (Vc) of the electric storage section at an upper limit voltage (Vcu) when the voltage (Vc) detected by the electric-storage section voltage detecting circuit reaches the upper limit voltage (Vcu), and controls the DC/DC converter to maintain the voltage (Vc) at a lower limit voltage (Vck) when the voltage (Vc) detected by the electric-storage section voltage detecting circuit reaches the lower limit voltage (Vck).

4. The power supply device of claim 1, wherein a first predetermined voltage range (ΔV1) representing a difference between the first predetermined output voltage (Vdc1) and the lower control voltage (Vdk), and a second predetermined voltage range (ΔV2) representing a difference between the upper control voltage (Vdu) and the second predetermined output voltage (Vdc2) are set at a total error range (ΔVer) that is a sum of a maximum error range of an output voltage from the electrical generator and a maximum error range in voltage control of the DC/DC converter.

5. The power supply device of claim 1, wherein the adjusting voltage control section inputs the adjusting voltage (Va) in form of a digital signal to the electrical generator.

6. The power supply device of claim 1, wherein the adjusting voltage control section switches the adjusting voltage (Va) between the first predetermined output voltage (Vdc1) and the second predetermined output voltage (Vdc2) gradually according to a predetermined time-elapse switching function.

7. The power supply device of claim 6, wherein a difference between the first predetermined output voltage (Vdc1) and the lower control voltage (Vdk) is defined as a first predetermined voltage range (ΔV1), and a difference between the upper control voltage (Vdu) and the second predetermined output voltage (Vdc2) is defined as a second predetermined voltage range (ΔV2),
in a case where the electrical generator starts producing the regenerated electric power, the adjusting voltage (Va) is raised gradually from the second predetermined output voltage (Vdc2) to the first predetermined output voltage (Vdc1) according to the predetermined time-elapse switching function, and the control circuit controls a reference voltage (Vst) of the DC/DC converter to be maintained lower than the adjusting voltage (Va) by the first predetermined voltage range (ΔV1) when the adjusting voltage (Va) becomes higher than the reference voltage (Vst) by the first predetermined voltage range (ΔV1), and
in a case where the production of the regenerated electric power ends, the adjusting voltage (Va) is lowered gradually from the first predetermined output voltage (Vdc1) to the second predetermined output voltage (Vdc2) according to the predetermined time-elapse switching function, and the control circuit controls the reference voltage (Vst) to be maintained higher than the adjusting voltage (Va) by the second predetermined voltage range (ΔV2) when the adjusting voltage (Va) becomes lower than the reference voltage (Vst) by the second predetermined voltage range (ΔV2).

8. A power supply device to be mounted in a mobile body, the device comprising:
a main power supply chargeable and dischargeable;
an electrical generator including an output terminal and a grounding terminal, and being connected to the main power supply at the output terminal, the electrical generator being configured to produce regenerated electric power when the mobile body is decelerated;
a DC/DC converter including a first end and a second end, and being connected electrically to the output terminal of the electrical generator at the first end;
an electric storage section connected electrically to the second end of the DC/DC converter;
an adjustment terminal connected electrically to the electrical generator and provided at a circuit portion that is a target for the electrical generator to control a voltage;
an output voltage detecting circuit electrically and directly connected between the adjustment terminal and the grounding terminal of the electrical generator, the output voltage detecting circuit being configured to detect an output voltage (Vd) that is used for adjusting a voltage at the adjustment terminal;
a control circuit connected electrically to both of the DC/DC converter and the output voltage detecting circuit; and
an adjusting voltage control section configured to supply an adjusting voltage (Va), which is used for adjusting the output voltage (Vd), to the electrical generator,
wherein the adjusting voltage control section sets the adjusting voltage (Va) at a first predetermined output voltage (Vdc1) at a timing when the electrical generator starts producing the regenerated electric power, and the control circuit controls the DC/DC converter such that the output voltage (Vd) becomes a lower control voltage (Vdk) lower than the first predetermined output voltage (Vdc1),
wherein the adjusting voltage control section sets the adjusting voltage (Va) at a second predetermined output voltage (Vdc2) that is lower than the first predetermined output voltage (Vdc1) at a timing when the electrical generator ends the production of the regenerated electric power, and the control circuit controls the DC/DC converter such that the output voltage (Vd) becomes an upper control voltage (Vdu) higher than the second predetermined output voltage (Vdc2), and
wherein the lower control voltage (Vdk) is set at a value which maximizes an amount of the regenerated electric power being charged into the main power supply.

9. The power supply device of claim 8, wherein the upper control voltage (Vdu) is set at a value as close as possible to a voltage of the main power supply while maintaining the electric storage section dischargeable.

10. The power supply device of claim 8 further comprising an electric-storage voltage section detecting circuit electrically connected to both of the electric storage section and the control circuit, the electric-storage section voltage detecting circuit being configured to detect a voltage (Vc) of the electric storage section,
wherein the control circuit controls the DC/DC converter to maintain the voltage (Vc) at an upper limit voltage (Vcu) when the voltage (Vc) detected by the electric-storage section voltage detecting circuit reaches the upper limit voltage (Vcu), and controls the DC/DC converter to maintain the voltage (Vc) at a lower limit voltage (Vck) when the voltage (Vc) detected by the electric-storage section voltage detecting circuit reaches the lower limit voltage (Vck).

11. The power supply device of claim 8, wherein a first predetermined voltage range (ΔV1) representing a difference between the first predetermined output voltage (Vdc1) and the lower control voltage (Vdk), and a second predetermined voltage range (ΔV2) representing a difference between the upper control voltage (Vdu) and the second predetermined output voltage (Vdc2) are set at a total error range (ΔVer) that is a sum of a maximum error range of an output voltage from the electrical generator and a maximum error range in voltage control of the DC/DC converter.

12. (Amended) The power supply device of claim 8, wherein the adjusting voltage control section inputs the adjusting voltage (Va) in a form of a digital signal to the electrical generator.

13. The power supply device of claim 8, wherein the adjusting voltage control section switches the adjusting voltage (Va) between the first predetermined output voltage (Vdc1) and the second predetermined output voltage (Vdc2) gradually according to a predetermined time-elapse switching function.

14. The power supply device of claim 13, wherein a difference between the first predetermined output voltage (Vdc1) and the lower control voltage (Vdk) is defined as a first predetermined voltage range (ΔV1), and a difference between the upper control voltage (Vdu) and the second predetermined output voltage (Vdc2) is defined as a second predetermined voltage range (ΔV2),
in a case where the electrical generator starts producing the regenerated electric power, the adjusting voltage (Va) is raised gradually from the second predetermined output voltage (Vdc2) to the first predetermined output voltage (Vdc1) according to the predetermined time-elapse switching function, and the control circuit controls a reference voltage (Vst) of the DC/DC converter to be maintained lower than the adjusting voltage (Va) by the first predetermined voltage range (ΔV1) when the adjusting voltage (Va) becomes higher than the reference voltage (Vst) by the first predetermined voltage range (ΔV1), and
in a case where the production of the regenerated electric power ends, the adjusting voltage (Va) is lowered gradually from the first predetermined output voltage (Vdc1) to the second predetermined output voltage (Vdc2) according to the predetermined time-elapse switching function, and the control circuit controls the reference voltage (Vst) to be maintained higher than the adjusting voltage (Va) by the second predetermined voltage range (ΔV2) when the adjusting voltage (Va) becomes lower than the reference voltage (Vst) by the second predetermined voltage range (ΔV2).
